# EUROPEAN PATENT APPLICATION

(11) **EP 1 511 278 A2**
(43) Date of publication of application: **02.03.2005**
(21) Application number: 04018638.9
(22) Date of filing: 05.08.2004
(51) Int. Cl.: H04M 1/2745

(54) **Portable communication terminal , computer program and method for originating a call**

(30) Priority: 25.08.2003 JP 2003299528
(71) Applicant: NEC CORPORATION, Tokyo (JP)
(72) Inventor: Arimitsu, Kazuhiro, NEC Corporation, Minato-ku Tokyo (JP)
(74) Representative: VOSSIUS & PARTNER

(57) **Abstract**

A portable communication terminal 101 is capable of originating a call based on any one of a plurality of local numbers that can be used upon origination. Previously registered in an address book 112 are each communication counterpart and a specific local number to be selected from the plurality of local numbers upon origination in association with each other. When a call is originated to a given communication counterpart selected by a user, the portable communication terminal 101 refers to the address book 112 to thereby originate a call based on the specific local number associated with the communication counterpart.

## Description

The present invention relates to a portable communication terminal such as a cellular telephone set, a PHS, or a portable information processing device that performs communication by use of a communication card attached thereto. In particular, the present invention relates to a portable communication terminal capable of originating a call with a plurality of local numbers changed over from one to another depending on a communication counterpart.

With regard to a portable communication terminal such as a cellular telephone set or a PHS (Personal Handy-phone System) , one terminal does not always correspond to one local telephone number (hereinafter, sometimes referred to as "local number"). For example, there even exists a cellular telephone set that is given a local telephone number for each country where a chip of a prepaid card system (IC card) is purchased.

Also, there exists a user who walks around with a plurality of portable communication terminals to be used separately depending on the application such as business use or private use. On the other hand, there is also a usage pattern of a signal portable communication terminal in which local numbers are changed over from one to another by appropriately exchanging a plurality of chips prepared for respective applications. Accordingly, a user no longer needs to possess a plurality of portable communication terminals, which is therefore rational.

However, with the portable communication terminal of a type in which local numbers are changed over from one to another by exchanging chips, a user needs to recognize criteria for use of a plurality of chips. That is, if a user is negligent in checking (recognizing) the chip that is currently set in the portable communication terminal possessed by him/her, such a mistake is likely to be made, for example, as to make a telephone call to one of his/her private friends using a local number for business use. In this case, a distinction between public and private becomes vague, thereby causing a problem with management such as who is to bear the charge for a telephone call.

In view of the above, proposed inJP 8-167936A (hereinafter, referred to as "Patent Document 1") is a portable communication terminal which can be used after appropriate selection from a plurality of local numbers and allows call destinations to be limited depending on the selected local number.

Fig. 18 is a table used in the portable communication terminal described in Patent Document 1, the table showing two categories of local numbers stored in a storage unit and conditions for proper use of the individual local numbers.

In Patent Document 1, as shown in Fig. 18 (corresponding to Fig. 2 of Patent Document 1), the portable communication terminal has two local numbers. With regard to the two local numbers, one local number represents a business-use local number (XXXXXXX) and the other local number represents a private-use local number (OOOOOOO).

Further, as conditions for the case of originating a call using the business-use local number, "usable area", "use time frame", and "available call number" for the portable communication terminal are respectively defined for the business-use local number. On the other hand, as conditions for the case of originating a call using the private-use local number, "usable area", "use time frame", and "available call number" for the portable communication terminal are respectively defined for the private-use local number.

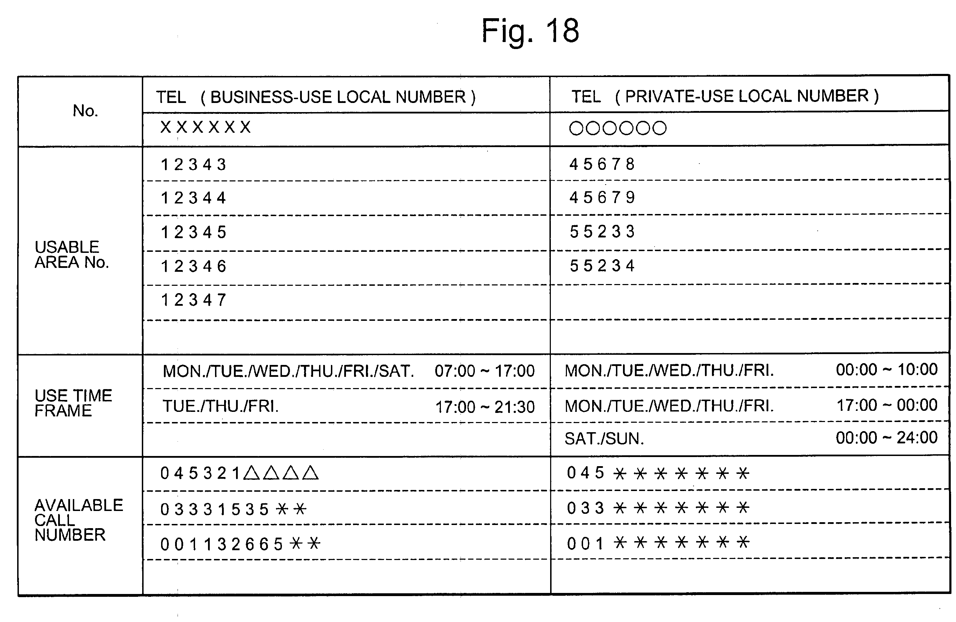

That is, when the portable communication terminal described in Patent Document 1 is used to make a telephone call with, for example, a private-use local number, it is required to satisfy the following three conditions described in the right half of the table shown in Fig. 18:
- a place specified by "usable area" in which a call can be originated;
- a "use time frame" in which a call can be originated; and
- an "available call number" representing a telephone number of a communication counterpart to which a call can be originated.

In other words, in the case where those three conditions are not satisfied simultaneously, as described in the 30th paragraph of Patent Document 1, the portable communication terminal cannot originate a telephone call with the private-use local number. Similarly, when a telephone call is made with a business-use local number, it is required to simultaneously satisfy the three conditions described in the left half of the table shown in Fig. 18.

Accordingly, the portable communication terminal according to Patent Document 1 is characterized by allowing the business-use local number and the private-use local number to be automatically changed over from one to another in a single portable communication terminal. However, when the portable communication terminal according to Patent Document 1 is used to make a telephone call, the three conditions constitute a restriction, thereby inhibiting instantaneous responses to many requests to originate a call which can be made in business and private life. That is, even in such a case where, for example, reference has been made to a product from a new customer, the portable communication terminal according to Patent Document 1 does not allow, if even one of the above-mentioned three conditions is not satisfied, an immediate reply to be made by telephone even with either of the local numbers, thereby lacking flexibility.

The present invention has been made in view of the above-mentioned problem, and has an object to cause a portable communication terminal capable of originating a call with a plurality of local numbers changed over from one to another appropriately, to change over a local number to the one to be used accurately depending on circumstances.

In order to achieve the above object, a portable communication terminal is characterized by comprising the following configuration.

That is, a portable communication terminal which originates a call based on any one of a plurality of local numbers that can be used upon origination is characterized by including:
storage means (storage device 113, 113A, 113B) for storing a single condition to be satisfied upon execution of origination and a specific local number to be selected from the plurality of local numbers when the condition is satisfied in association with each other; and
origination control means (control unit 105, 105A, 105B, 106) for, when the condition is satisfied, originating a call to a communication counterpart based on the specific local number stored in association with the condition.

According to a preferred embodiment, the single condition indicates a specific communication counterpart, and
when the specific communication counterpart is selected by a user, the origination control means (105, 106) obtainsfrom the storage means (113) the specific local number stored in association with the specific communication counterpart, and originates a call to the specific communication counterpart based on the obtained specific local number.

Further, according to another preferred embodiment, the single condition indicates information representing a specific time frame, and
when a current time is included in the specific time frame, the origination control means (105A, 106) obtains from the storage means (113A) the specific local number stored in association with the specific time frame, and originates a call to the communication counterpart based on the obtained specific local number.

Further, according to another preferred embodiment, the single condition indicates information representing a specific area,
the portable communication terminal further includes location detection means (location measurement unit 501) for detecting a current location of the own terminal, and
when the current location detected by the location detection means is included in the specific area, the origination control means (105A, 106) obtains from the storage means (113B) the specific local number stored in association with the specific area, and originates a call to the communication counterpart based on the obtained specific local number.

Note that the above object is also achieved by a method corresponding to the portable communication terminal of each of the above-mentioned configurations.

Further, the above obj ect is achieved by a computer program for implementing the portable communication terminal of each of the above-mentioned configurations and the corresponding method, and a computer-readable storage medium storing the computer program.

Other features and advantages of the present invention will be apparent from the following description taken in conjunction with the accompanying drawings, in which like symbols designate the same or similar parts throughout the figures thereof.

The above and other objects, features and advantages of the present invention will become more apparent from the following detailed description when taken in conjunction with the accompanying drawings wherein:
Fig. 1 is a block diagram representing a schematic configuration of a portable communication terminal according to a first embodiment of the present invention;
Fig. 2 is a diagram showing display items displayed when information is registered in an address book used in the first embodiment;
Fig. 3 is a diagram exemplifying display items displayed on the portable communication terminal by a conventional address book function;
Fig. 4 is a diagram conceptually showing a data structure of a part of the address book stored in a memory 113 according to the first embodiment;
Fig. 5 is a flow chart showing a registration processing for the address book of the portable communication terminal according to the first embodiment;
Fig. 6 is a flow chart showing an origination processing for the portable communication terminal according to the first embodiment;
Fig. 7 represents a part of contents of the address book which are displayed on a display unit 115 in step S223;
Fig. 8 is a diagram exemplifying a local number selection screen upon origination;
Fig. 9 is a diagram exemplifying displayed contents of the address book which are limited solely to display of communication counterparts registered as business use;
Fig. 10 is a diagram exemplifying displayed contents of the address book which are limited solely to display of communication counterparts registered as private use;
Fig. 11 is a flow chart showing a termination control processing performed when a private termination mode is set in a portable communication terminal according to Modification 2 of the first embodiment;
Fig. 12 is a block diagram representing a schematic configuration of a portable communication terminal according to a second embodiment of the present invention;
Fig. 13 is a diagram showing a structural example of a time frame selection table 302 for reference in a portable communication terminal 101A according to the second embodiment;
Fig. 14 is a flow chart showing a changeover control processing for local numbers which is performed when a call is originated by the portable communication terminal 101A according to the second embodiment;
Fig. 15 is a block diagram representing a schematic configuration of a portable communication terminal according to a third embodiment of the present invention;
Fig. 16 is a diagram exemplifying contents of a location selection table provided to a portable communication terminal 101B according to the third embodiment;
Fig. 17 is a flow chart showing the changeover control processing for local numbers which is performed when a call is originated by the portable communication terminal 101B according to the third embodiment; and
Fig. 18 is a table used in a portable communication terminal described in Patent Document 1, the table showing two categories of local numbers stored in a storage unit and conditions for proper use of the individual local numbers.

Preferred embodiments of the present invention will now be described in detail in accordance with the accompanying drawings.

Hereinafter, detailed description will be made of a portable communication terminal (portable terminal) according to the present invention with reference to the drawings. Note that in each embodiment described below, the term "portable communication terminal" includes not only a portable radio telephone such as a cellular telephone set or a PHS, but also an information processing device such as a PDA (Personal Digital Assistance) equipped with a communication module.

### <First Embodiment>

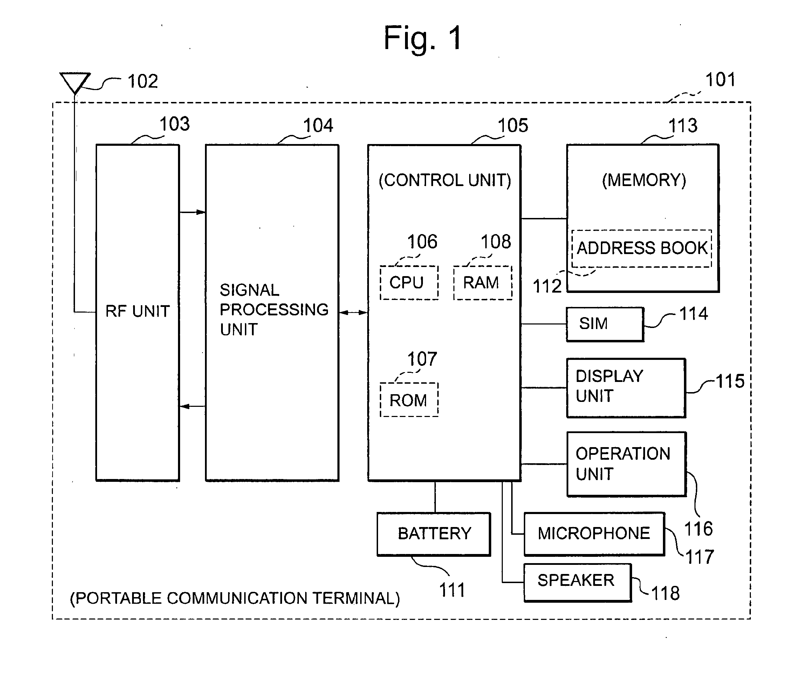

Fig. 1 is a block diagram representing a schematic configuration of a portable communication terminal according to a first embodiment of the present invention.

This portable communication terminal 101 includes an antenna 102, an RF (Radio Frequency) unit 103, a signal processing unit 104, a control unit 105, a memory 113, a SIM (Subscriber Identity Module) 114, a display unit 115, an operation unit 116, a microphone 117, a speaker 118, and a battery 111.

The battery 111 is a power source for driving the portable communication terminal 101. The memory (storage device) 113 stores an address book 112. The SIM 114 holds a local number. The display unit 115 displays various information according to operations of the portable communication terminal 101. The operation unit 116 includes a pointing device and a plurality of key switches which allow a user to input an instruction to the portable communication terminal 101.

The control unit 105 performs the entire control of the portable communication terminal 101. The control unit 105 includes circuit components such as a CPU (central processing unit) 106, a ROM (read-only memory) 107, and a RAM (random-access memory) 108. The CPU 106 has a central function for controlling the portable communication terminal 101. The ROM 107 stores a control program to be executed by the CPU 106. The RAM 108 is used as a memory for a work area and temporary storage when the CPU 106 operates.

The signal processing unit 104 performs a signal processing when radio communication is performed through the RF unit 103.

The RF unit 103 converts a high-frequency radio signal received via the antenna 102 to an analog signal in a predetermined low-frequency band, and further converts the analog signal obtained by the conversion to a digital signal (digital data).

Upon reception, the signal processing unit 104 performs a decoding processing on the digital data inputted from the RF unit 103, thereby de-spreading the data. On the other hand, upon transmission, the signal processing unit 104 performs an encoding processing on data inputted from the control unit 105, thereby spreading the data.

The control unit 105 executes an address book function to thereby perform a search or a check on data registered in the address book 112. The control unit 105 controls the SIM 114 currently attached to the portable communication terminal 101 to thereby perform a changeover control on local numbers.

The SIM 114, which is generally called a SIM card, previously stores subscription right information including a local number. In this embodiment, in a state of being attached with the SIM 114, the portable communication terminal 101 performs communication with an external device based on the subscription right information stored in the SIM 114 in advance. That is, the subscription right information is not written to the inside of the terminal according to the operation of the portable communication terminal 101, but written to the SIM 114 detachably attached thereto.

Additionally written to the SIM 114 used in the first embodiment are, for example, two local numbers. In each embodiment described below, for convenience of explanation, description is made on condition that the two local numbers represents a "business-use local number" and a "private-use local number". However, there is no particular limitation on how to properly use a plurality of local numbers. The SIM 114 purchased by a user may of course have more local numbers written thereto.

Also, examples of enhancing the function of the SIM 114 include a UIM (User Identity Module). Accordingly, instead of the SIM 114, a device configuration adopting the UIMmaybe adopted to the portable communication terminal 101.

Further, a device configuration in which the portable communication terminal 101 handles a plurality of local numbers as being capable of changeover from one to another is not limited to the device configuration adopting a recording medium such as the SIM 114 detachably attached thereto. That is, the device configuration may also be adopted in which a part or all of a plurality of local numbers to be handled by the portable communication terminal 101 are not set in a detachably attachable recording medium but set in the terminal itself.

Subsequently, in a state where a telephone line is connected based on either local number, via the RF unit 103 and the signal processing unit 104 which are described above, the control unit 105 transmits the voice of a user inputted into the microphone 117 to a communication counterpart, and at the same time, outputs the voice received from the communication counterpart from the speaker 118.

Note that as the above-mentioned hardware configuration of the portable communication terminal 101 and a communication function itself implemented by the hardware configuration, general ones can be adopted at present. Thus, detailed description thereof is omitted in this embodiment.

In the first embodiment, as described above as an example, the two local numbers are written to the SIM 114. Therefore, no local number is set in the portable communication terminal 101 itself. A user sets the SIM 114 in the portable communication terminal 101 main body prior to use thereof. In this embodiment, the user acknowledges the portable communication terminal 101 as a terminal corresponding to the two local numbers ("business-use local number" and "private-use local number"), and uses the terminal while appropriately changing over the local numbers to either one.

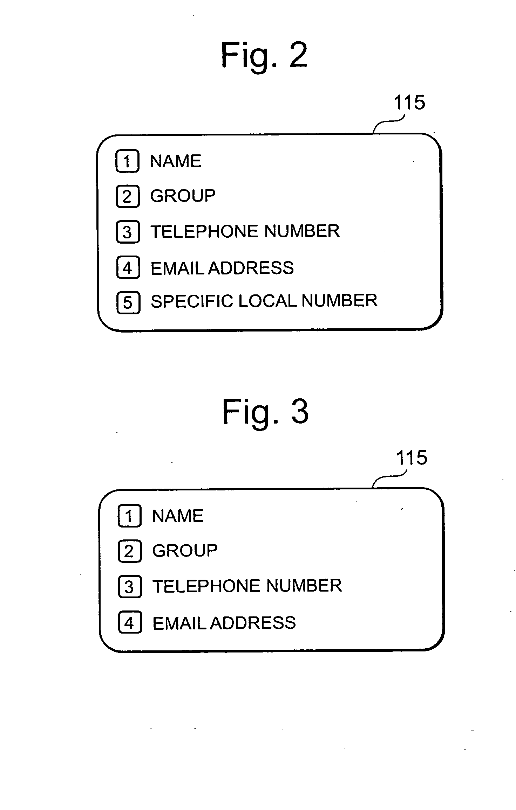

Fig. 2 is a diagram showing display items displayed when information is registered in the address book used in the first embodiment. That is, the control unit 105 displays the display items shown in Fig. 2 on the display unit 115 when the user registers the information including a telephone number and an email address related to a given communication counterpart (person or company) in the address book 112 within the memory 113.

Shown in Fig. 2 are as follows:
(1) a name, which represents a personal name or a corporate name of a communication counterpart such as a person or a company (organization);
(2) a group, which represents the name of a group to which the above-mentioned communication counterpart (that is, the communication counterpart designated in the name field (1)) belongs, the group being among groups defined by dividing the communication counterparts into several groups;
(3) a telephone number, which represents the telephone number of the above-mentioned communication counterpart;
(4) an email address, which represents the email address of the above-mentioned communication counterpart; and
(5) a specific local number, which represents a local number the selection of which is hoped by a user upon origination (calling out) to the above-mentioned communication counterpart, among a plurality of local numbers usable by the portable communication terminal 101.

Here, Fig. 3 is a diagram exemplifying display items displayed on the portable communication terminal by a conventional address book function. Comparison between the display items shown in Fig. 3 and the display items shown in Fig. 2 according to this embodiment makes it clear that Fig. 3 lacks the "specific local number" field. With the portable communication terminal 101, a user can register a "specific local number" upon registering information in the address book 112. Further, in this embodiment, the SIM 114 handles two local numbers, thereby allowing registration of either of the two local numbers as "specific local number".

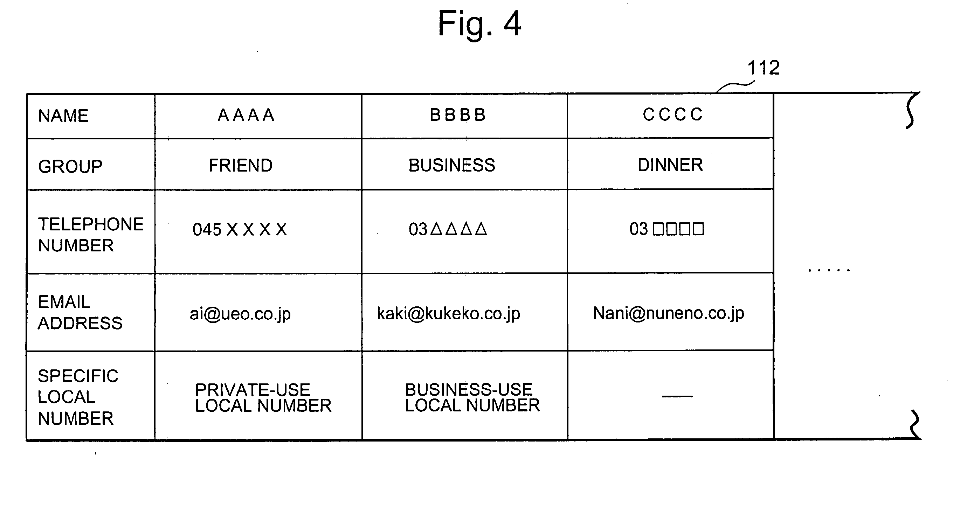

Fig. 4 is a diagram conceptually showing a data structure of a part of the address book stored in the memory 113 according to the first embodiment.

In the address book 112, data related to communication counterparts (names) are stored for each of the items shown in Fig. 2. Here, either the "business-use local number" or the "private-use local number" is registered in the "specific local number" field. In this case, upon origination (making a phone call) to the communication counterpart, the control unit 105 automatically selects the registered "specific local number" and uses the specific local number to originate a call.

On the contrary, in the case where the "specific local number" has not been registered for the communication counterpart, a user needs to manually select which local number is used upon origination every time a call is originated to the communication counterpart. In the case of making a telephone call to, for example, a restaurant "CCCC", the user uses the "business-use local number" in order to make a reservation for entertainment, and uses the "private-use local number" in order to make a reservation for private dinner. In such a case as described above where it depends on circumstances which local number is to be used, the user should register neither of the local numbers as the "specific local number". In a data structure exemplified in Fig. 4, a hyphen is placed to express that neither of the local numbers is registered as the "specific local number".

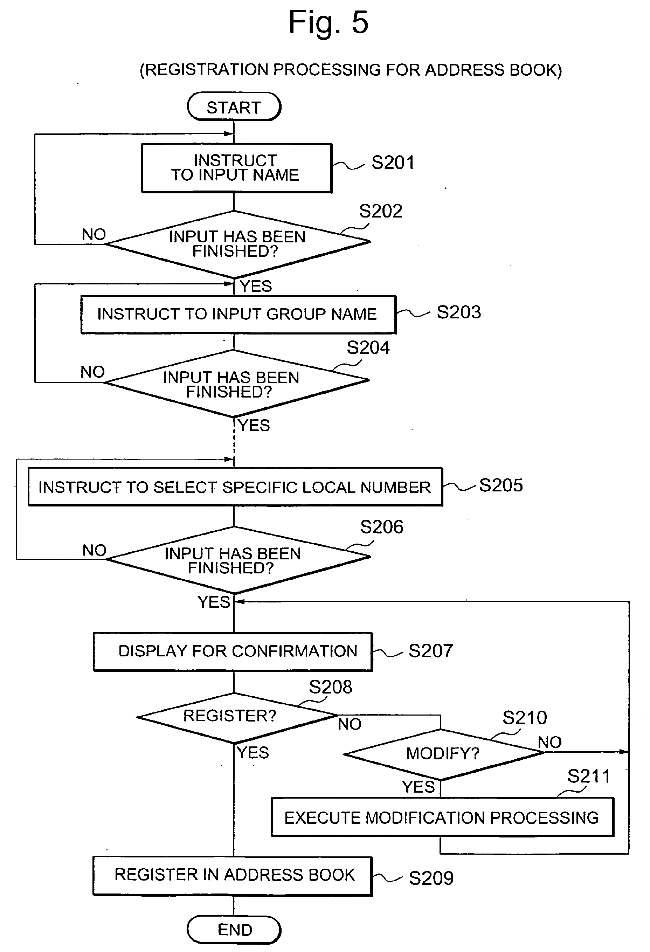

Fig. 5 is a flow chart showing a registration processing for the address book of the portable communication terminal according to the first embodiment. The flow chart represents a processing procedure of a software program executed by the CPU 106 of the control unit 105.

That is, a user operates the portable communication terminal 101 to select a mode of the registration processing for the address book from a menu screen (not shown) , in response to which the CPU 106 starts the processes of the flow chart shown in Fig. 5. The registration processing allows the user to register information (name, group name, and the like) on a desired communication counterpart, in the address book 112.

First, the CPU 106 uses the display unit 115 to instruct the user to input the name of a desired communication counterpart (step S201). When the CPU 106 recognizes that the user has finished inputting the name based on the operation of the operation unit 116 (judged as YES in step S202), the CPU 106 next instructs the user to input the group name corresponding to the above name (step S203).

When the CPU 106 recognizes that the user has finished inputting the group name based on the operation of the operation unit 116 (judged as YES in step S204), the CPU 106 sequentially prompts the user to input a telephone number and to input an email address (where the same procedure is repeated, so that description thereof is omitted).

When the above processing end, the CPU 106 uses the display unit 115 to instruct the user to input the specific local number (step S205). In this step, the user performs an input operation to select one of three options, that is, to select either of the two local numbers, or to select neither thereof, as the "specific local number".

If the user finishes the input operation of step S205 through the operation unit 116 (judged as YES in step S206), the CPU 106 displays each of the above-mentioned items on the display unit 115 (step S207). At this time, if there is no error in each of the displayed items for registration, the user performs a predetermined key operation for enabling the registration (judged as YES in step S208). In this case, the CPU 106 registers the information of the items inputted by the user in steps S201 to S205, in the address book 112 within the memory 113 (step S209).

There is a case where the user hopes to modify at least a part of the items for registration (judged as NO in step S208 and judged as YES in step S210). Inthiscase, the CPU 106 executes a modification processing through a predetermined procedure (step S211) to thereby receive a user's modification operation for the above-mentioned items. Then, when recognizing that the modification operation is complete, the CPU 106 advances the processing to step S207. The processings in step S207 where display for confirmation is performed and in the subsequent steps are as described above.

By the registration processing described above, the control unit 105 (CPU 106) registers the items (1) to (5) of the address book 112 described above in association with each corresponding communication counterpart inputted by the user.

Note that with respect to the registrationprocessing shown in Fig. 5, the description has been made of the processing of registering one piece of address information at a time in the address book 112. However, the above processing configuration may not necessarily be used, and another processing conf iguration may be adopted in which pieces of information on a plurality of communication counterparts are registered sequentially.

Further, with respect to the above processing, the description has been made of the case where the information on a new communication counterpart is registered in the address book 112. However, the above processing configuration may not necessarily be used, and an alternative configuration may be adopted in which if the address information that has already been registered is corrected or changed, the user designates an item that he/she hopes to modify, and a desired modification content can be inputted for the designated item. For example, in the case where the content of the "specific local number" field is changed afterward, the configuration may be set to allow selection of a communication counterpart necessary for modification to be made from a list display screen for communication counterparts, and allow modification of the specific local number related to the selected communication counterpart.

Next, descriptionwillbemadeofanoriginationprocessing performed by the portable communication terminal 101 with the address book registered as described above.

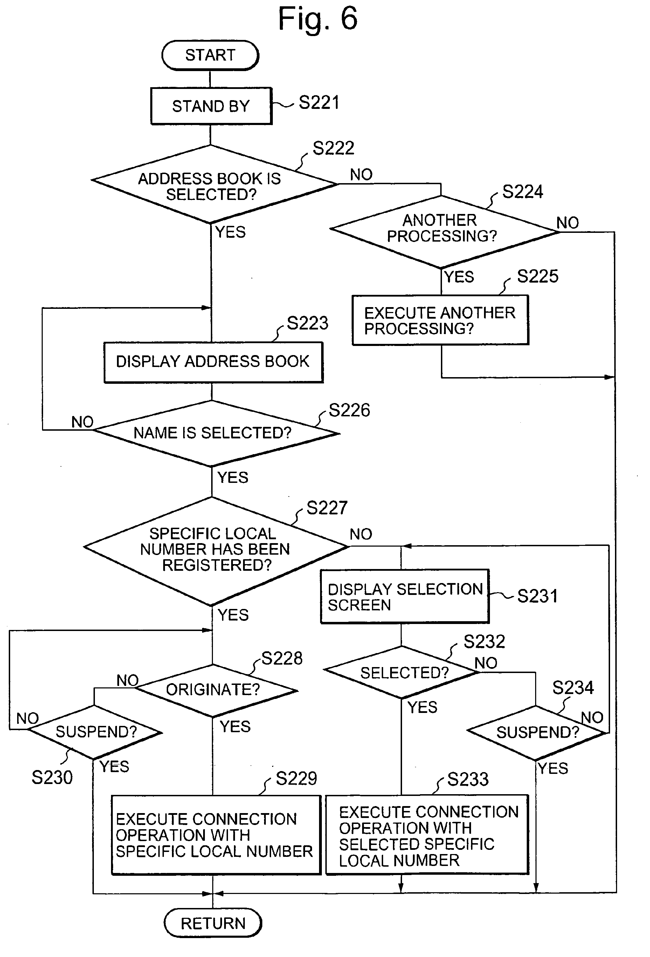

Fig. 6 is a flow chart showing the origination processing for the portable communication terminal according to the first embodiment. The flow chart represents a processing procedure of the software program executed by the CPU 106 of the control unit 105.

The portable communication terminal 101 is in a standby state when power turns on (step S221). In this state, a user can operate the operation unit 116 to select a desired processing.

When the user selects the display of the address book for origination to any of the communication counterparts registered in the address book 112 (judged as YES in step S222), the CPU 106 displays the contents of the address book 112 stored in the memory 113 on the display unit 115 (step S223). On the other hand, if the user selects another processing (judged as YES in step S224), the CPU 106 executes the selected processing (step S225).

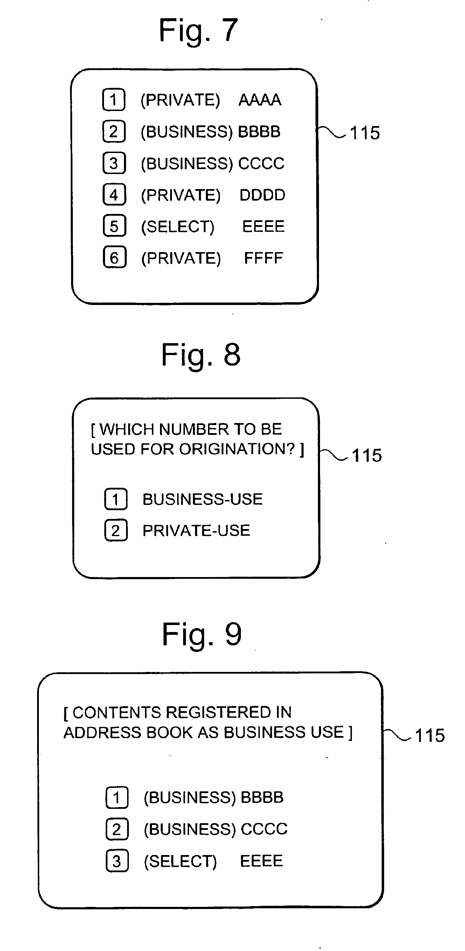

Fig. 7 represents a part of the contents of the address book which are displayed on the display unit 115 in step S223. Here, on a communication counterpart basis, the display unit 115 displays a name and, within parentheses, a class of the specific local number to be used upon origination to the communication counterpart corresponding to the name.

For example, the class represents as follows. That is, in the case of a communication counterpart corresponding to a name "AAAA" displayed in the first field in Fig. 7, upon origination to this communication counterpart, the "private-use local number" is used. Meanwhile, in the case of a communication counterpart corresponding to a name "EEEE" displayed in the fifth field in Fig. 7, upon origination to this communication counterpart, the user can select either the "business-use local number" or the "private-use local number". Note that the terms within parentheses are displayed as notes, so that the display of the contents within parentheses can be omitted if not necessary.

When the contents of the address book 112 are displayed on the display unit 115 as shown in Fig. 7, the user selects therefrom the name of a desired communication counterpart to which a call is to be originated (judged as YES in step S226).

In the case where the selection operation for a communication counterpart (name) is detected in step S226, the CPU 106 checks whether or not a specific local number has been registered for the communication counterpart registered in the address book 112 (step S227). Then, if the specific local number has been registered (judged as YES in step S227), in response to the user's origination operation, the CPU 106 performs a connection operation to the communication counterpart based on the selected specific local number (judged as YES in step S228; step S229). On the other hand, if the origination operation is not performed by the user in step S228 and a suspension operation is performed instead (judged as YES in step S230), the CPU 106 returns to the standby state again.

Here, upon the connection operation in step S229, there is a case where a local number that is currently set in the portable communication terminal 101 differs from a local number that is registered for the communication counterpart in the address book 112. In such a case, the CPU 106 changes over from the local number used by the SIM 114 upon origination to the specific local number registered for the communication counterpart.

On the other hand, if the specific local number has not been registered for the communication counterpart (judged as NO in step S227) , the CPU 106 displays a selection screen (Fig. 8) on the display unit 115 to prompt the user to select the local number for the origination (step S231).

Fig. 8 is a diagram exemplifying a local number selection screen upon origination. That is, in step S231, the user can use the selection screen displayed on the display unit 115 to select whether to use the "business-use local number" or the "private-use local number" for the origination. Note that in step S231, the digit strings of local numbers that can be selected may be displayed. However, the display of such guidance as shown in Fig. 8 offers greater convenience to the user.

If the user hopes for the origination, either option is selected on the selection screen (Fig. 8) (judged as YES in step S232). Then, the CPU 106 performs the connection operation to the communication counterpart based on the local number corresponding to the selected one of the options prompted by the guidance (step S233). On the other hand, if operated to suspend the origination itself (judged as YES in step S234), the CPU 106 returns to the standby state again.

Thus, according to the first embodiment, after the user performs settings once on the address book 112, the user can use the portable communication terminal 101 by appropriately selecting between the "business-use local number" and the "private-use local number" without paying attention to which of those local numbers to use.

Further, there is a case where the user hopes to properly use the "business-use local number" and the "private-use local number" depending on circumstances even when calls are originated to the identical communication counterpart. As described above, this embodiment handles such a case (steps S231 to S233), thereby providing flexibility.

Note that Fig. 6 is used to described the case of making a telephone call based on the address book 112 displayed on the display unit 115. Meanwhile, there is another case where the user directly inputs the telephone number of a communication counterpart. In such a case, similarly to the case where the specific local number is judged as not having been registered in step S277, the CPU 106 may display the selection screen to prompt the user to make a selection from the local numbers.

Thus, according to the portable communication terminal 101 in accordance with the first embodiment described above, a call can be originated to each communication counterpart based on the optimal local number. Accordingly, it is not necessary for the user to judge which local number to be selected at each time of origination, thereby offering excellent convenience. Further, the portable communication terminal 101 can reliably solves the problem with management such as who is to bear the charge for a telephone call which arises in a case where the user fails to change over the local numbers and other such cases.

### <Modifications of First Embodiment>

### (Modification 1)

According to the first embodiment described above, the data for business use and private use which are registered in the address book 112 are collectively displayed. On the contrary, the configuration may allow the user to select either the business-use local number or the private-use local number to be displayed, and may display the selected content part of the address book. This configuration offers an advantage in that the user can find out more easily the name of any one of communication counterparts to which the user hopes a call is to be originated, from a plurality of communication counterparts registered in the address book 112 in advance.

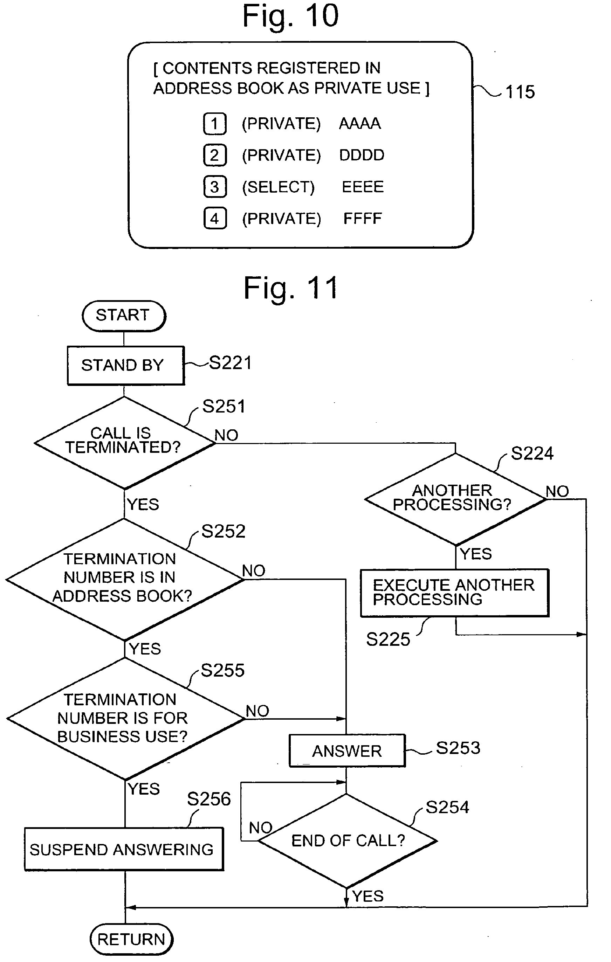

Fig. 9 is a diagram exemplifying displayed contents of the address book which are limited solely to display of communication counterparts registered as business use. On the other hand, Fig. 10 is a diagram exemplifying displayed contents of the address book which are limited solely to display of communication counterparts registered as private use. In the displayed contents, the display of the contents within parentheses can be omitted similarly to the case of the display shown in Fig. 7.

### (Modification 2)

The portable communication terminal 101 in accordance with the first embodiment described above, which is a single piece of device, allows a call to be originated by appropriate changeover between a plurality of telephone numbers (local numbers) for business use and private use. Thus, there may be a terminated call to the "business-use local number" even when the user is at a private location such as home or is spending his/her private time. In such a case, the user may hope to eliminate the possibility of receiving a telephone call for business use in private circumstances as much as possible.

In view of this, in Modification 2, the portable communication terminal 101 in accordance with the first embodiment is configured to allow settings of an operation mode upon termination called a "private termination mode". When the user selects the "private termination mode", the following processing can be performed to prevent the user from being positively concerned with a telephone call for business use, in private circumstances.

Fig. 11 is a flow chart showing a termination control processing performed when the private termination mode is set in the portable communication terminal according to Modification 2 of the first embodiment. The flow chart represents a processing procedure of the software program executed by the CPU 106 of the control unit 105. Note that in Fig. 11, the same components as those of Fig. 6 are denoted by the same symbols, and description thereof is omitted as appropriate.

In Fig. 11, when a call is terminated in the standby state (judged as YES in step S251), the CPU 106 searches the address book 112 within the memory 113 to thereby check whether or not a termination number has been registered as the telephone number of any of communication counterparts registered in the address book 112 (step S252).

If the call is judged as having been terminated from a communication counterpart that is not registered in the address book 112 (judged as NO in step S252), the CPU 106 cannot discriminate upon the termination whether the call is terminated from a communication counterpart for private use or a communication counterpart for business use. In this case, the CPU 106 performs control such that the user can answer the termination (step S253). Then, upon end of call (judged as YES in step S254), the CPU 106 returns to the standby state again.

On the other hand, if the telephone number of the terminated call in step S251 is judged as having been registered in the address book 112 (judged as YES in step S252), the CPU 106 judges whether or not the "business-use local number" is registered as a specific local number for the communication counterpart corresponding to the telephone number (step S255). If judged as NO (as not being the "business-use local number") as a result of this judgment, the CPU 106 notifies the user of the termination to the "private-use local number" in a general form using the speaker 118 or the like (step S253). Then, the CPU 106 holds a telephone line until an end-of-call operation by the user is detected in step S254.

Also in the case where the address book 112 has neither of the local numbers registered as the "specific local number" for the communication counterpart corresponding to the telephone number terminated at this time (that is, the case where the terminated telephone number is processed as "select" as shown in the communication counterpart in the fifth field of Fig. 7), the CPU 106 performs the above processing of step S253.

Here in step S253, the CPU 106 can prompt the user to select whether the user is to answer the termination. At this time, if the user performs an operation for "suspending termination", the CPU 106 performs operation for suspending answering similar to an operation of step S256 described later.

On the other hand, if it is judged that the address book 112 has the "business-use local number" registered for the communication counterpart corresponding to the telephone number terminated at this time (judged as YES in step S255), the CPU 106 suspends answering (step S256).

Here, the answer suspension in step S256 refers to an operation that uses a telephone answering machine service (message taking service) provided on a network side to which the portable communication terminal 101 is connected via a base station (not shown), or a telephone answering machine function provided to the portable communication terminal 101. That is, in step S256, the CPU 106 accesses the telephone answering machine service or executes the telephone answering machine function to thereby automatically answer the termination.

Therefore, in this Modification, the user does not become aware that a telephone call is terminated if the telephone call has been judged apparently as being for business use, so that time and labor for answering such a telephone call can be eliminated. If the private termination mode is turned off, the telephone call for business use made from a company or the like can of course be answered even on a holiday.

Note that in the origination processing shown in Fig. 6, it is detected in step S230 whether or not the user has performed the suspension operation for origination. However, such a processing may not be necessarily used. That is, the configuration may be adopted in which a call can be originated based on a number other than the specific local number that is confirmed to have been registered in step S277.

### <Second Embodiment>

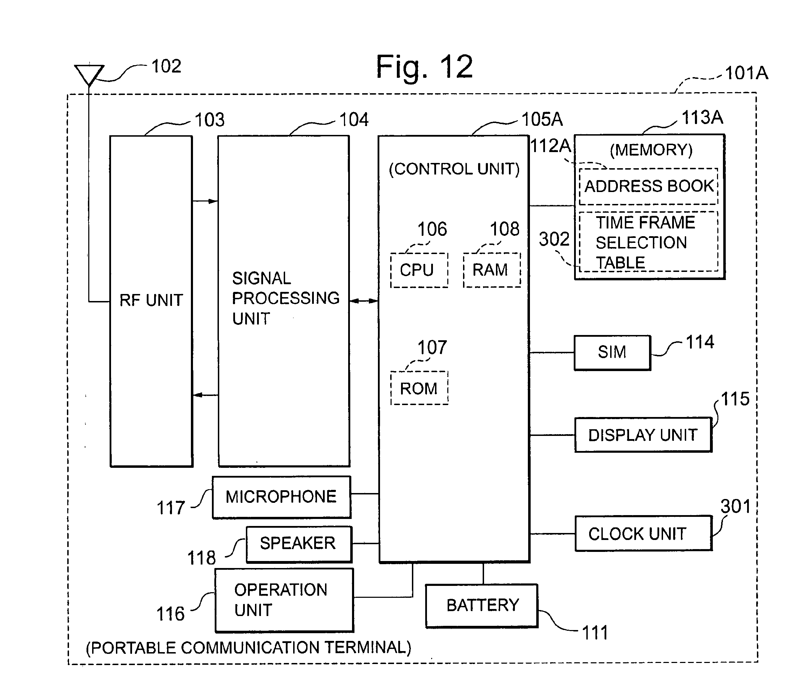

Fig. 12 is a block diagram representing a schematic configuration of a portable communication terminal according to a second embodiment of the present invention. In Fig. 12, the same components as those of Fig. 1 are denoted by the same symbols, and description thereof is omitted as appropriate.

In a portable communication terminal 101A according to the second embodiment, a clock unit 301 for measuring a date/time is additionally connected to a control unit 105A. The clock unit 301 also has a calendar including holidays (not shown) incorporated thereinto. The calendar can be changed in contents by a predetermined person such as a user, and can be customized to have contents reflecting his/her own holidays.

A memory (storage device) 113A stores an address book 112A with a general data structure in which the specific local number is not registered unlike the address book 112 described in the first embodiment.

The memory 113A also stores a time frame selection table 302. Registered in the time frame selection table 302 is information representing time frames for changeover between the "business-use local number" and the "private-use local number".

Here, the address book 112A with a general data structure refers to an address book in which communication counterparts are not individually discriminated into business use and private use. In this second embodiment, similarly to the portable communication terminal 101 according to the first embodiment, the portable communication terminal 101A is capable of origination by appropriately changing over two local numbers for business use and private use from one to another. However, the portable communication terminal 101A according to the second embodiment determines the local number to be used upon the origination based on the setting content of the time frame selection table 302.

Accordingly, in the case of registering a communication counterpart in the address book 112A in this embodiment, the CPU 106 displays the displayed screen exemplified in Fig. 3 on the display unit 115.

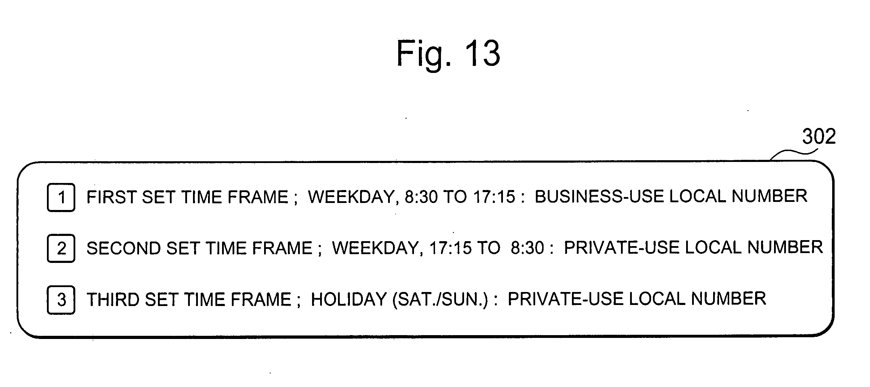

Fig. 13 is a diagram showing a structural example of a time frame selection table 302 for reference in the portable communication terminal 101A according to the second embodiment.

As shown in the diagram, set in the time frame selection table 302 are:
- a time frame from 8:30 to 17:15 as a first set time frame where the "business-use local number" is selected; and
- a time frame from 17:15 to 8: 30 as a second set time frame where the "private-use local number" is selected.

Additionally set in the time frame selection table 302 is all hours of holidays (Saturdays and Sundays) as a third set time frame where the "private-use local number" is selected.

Therefore, according to the portable communication terminal 101A in accordance with the second embodiment, in the time frame from 8:30 to 17:15 on weekdays, the "business-use local number" is used upon origination as the local number. Also, in the time frame from 17:15 to 8 : 30 on weekdays, the "private-use local number" is used upon origination. Further, in all hours of holidays (Saturdays and Sundays), the "private-use local number" is used upon origination.

Such settings (including changes) of the time frame selection table 302 for realizing automatic selection between the local numbers can be made in the portable communication terminal 101A, for example, by the user's,operation of the operation unit 116 in the state where the time frame selection table 302 is read out on the display unit 115.

The control unit 105A (CPU 106) stores in the memory 113A the time frame selection table 302 in which the set time frames are individually associated with a time frame and either of the local numbers.

Note that the settings (including changes) of the time frame selection table 302 may be made by a corporation such as a company supplying the portable communication terminal 101A for business use. Alternatively, a host computer run by such a corporation may be used to perform automatic settings on a plurality of portable communication terminals 101A, for example, collectively via a communication line, or on a part of the portable communication terminals 101A. If the time frame selection table 302 is automatically set by means of communication, the contents of the time frame selection table 302 may preferably be set for each user based on his/her work hours. Thus, updates of the time frame selection table 302 by means of communication are performed at appropriate timings, thereby allowing power savings in maintenance of the portable communication terminal 101A.

Note that the updates of the information held within the portable communication terminal 101A by means of communication may be performed on not only the time frame selection table 302 but also all or a part of the registered contents of the address book 112.

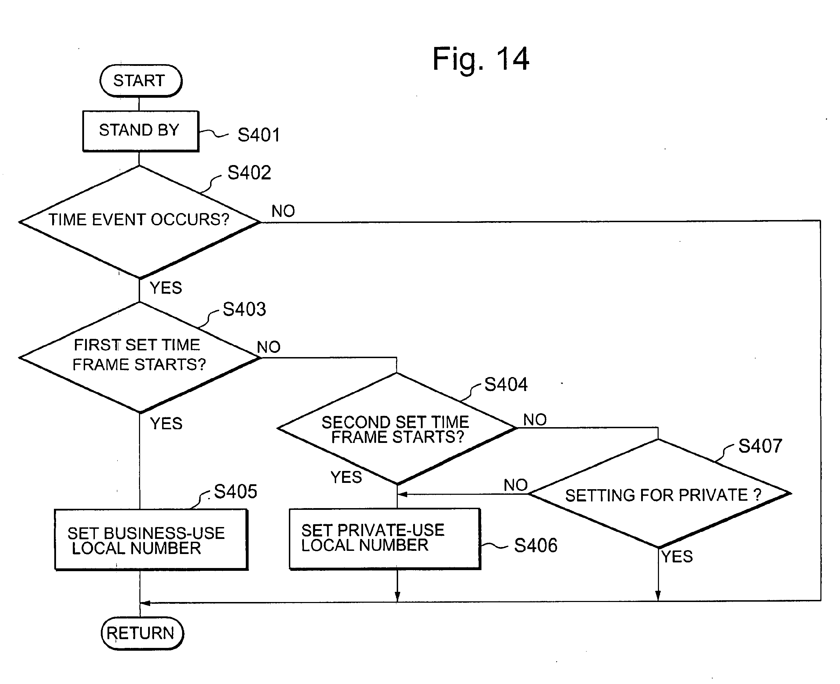

Fig. 14 is a flow chart showing a changeover control processing for local numbers which is performed when a call is originated by the portable communication terminal 101A according to the second embodiment. The flow chart represents a processing procedure of a software program executed by the CPU 106 of the control unit 105A. During the standby state (step S401), the CPU 106 of the control unit 105A is monitoring whether or not a time event occurs (step S402). The CPU 106 holds the standby state on condition that there occurs no time event until it becomes the start time of any of the set time frames specified in the time frame selection table 302 shown in Fig. 13 (judged as NO in step S402).

If there occurs a time event (judged as YES in step S402) , the CPU 106 judges which of the set time frames the time event indicates the start time of (steps S403 and S404).

That is, in step S403, the CPU 106 judges whether or not the time event indicates that the start time (8:30 on a weekday) of the first set time frame is reached. In step S404, the CPU 106 judges whether or not the time event indicates that the start time (17: 15 on a weekday) of the second set time frame is reached. Note that if judged as NO in step S404, the CPU 106 judges that the start time (start time of a holiday) of the third set time frame is reached.

Note that the start time of a holiday is not necessarily 0:00 a.m. For example, the start time of the holiday following a night shift passing midnight becomes later than 0:00 a.m.

If the first set time frame is judged to be set in step S403, the CPU 106 selects the "business-use local number" as the local number to be used by the portable communication terminal 101A for origination (step S405). Similarly, if the second set time frame is judged to be set in step S404, the CPU 106 selects the "private-use local number" as the local number to be used by the portable communication terminal 101A for origination (step S406).

Further, if occurrence of the time event indicates the start of the third set time frame (judged as NO in step S404), the CPU 106 checks whether or not a currently selected local number is the "private-use local number" (step S407). Then, if the "private-use local number" is judged as having been set in step S407, the CPU 106 returns the processing to step S401. On the other hand, if the "business-use local number" is judged as having been set in step S407, the CPU 106 changes over to the "private-use local number" (step S406).

Thus, according to this embodiment, in the case where the user makes a call from 8:30 to 17:15 in the evening on weekdays, the "business-use local number" is automatically selected. Alternatively, in the case where the user makes a call in the time frame other than the above on weekdays, the "private-use local number" is automatically selected. When the user makes a call on holidays, the private-use local number is automatically selected. Accordingly, the user does not need to judge which local number is to be selected every time a call is originated, thereby offering excellent convenience. Further, the portable communication terminal 101A can reliably solves the problemwith who is to bear the charge for a telephone call which arises in the case where the user fails to change over the local numbers and other such cases.

Further, according to the portable communication terminal 101A in accordance with the second embodiment described above, even if the address book to be referred to has no special data structure, it is possible to change over the local numbers depending on the time frame.

Note that in the second embodiment, the three time frames are set as shown in Fig. 13. However, the number of time frames to be set may not be limited to three. In that case, the judging steps of the changeover control processing for local numbers shown in Fig. 14 need to be configured so as to correspond to the number of time frames which is arbitrarily set.

### <Third Embodiment>

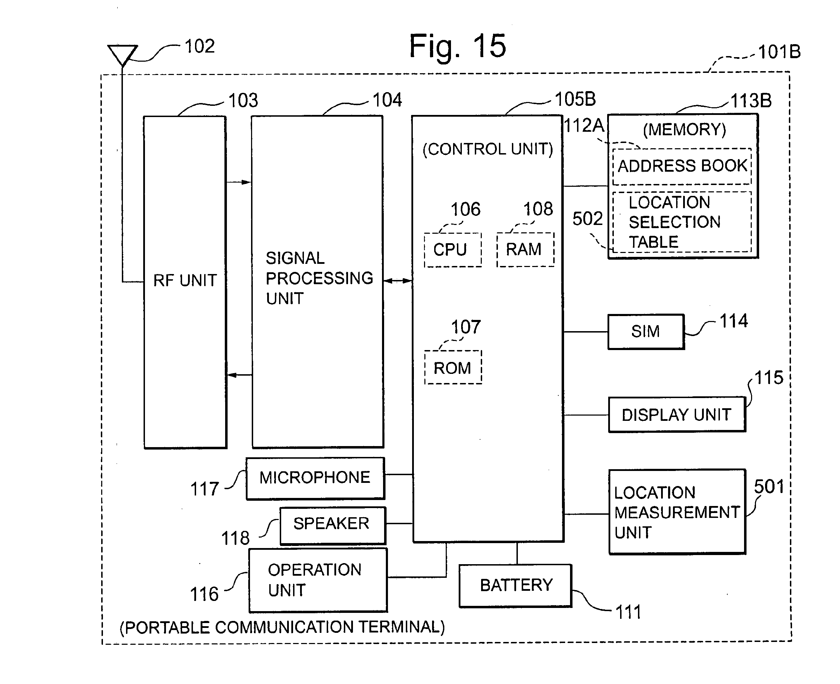

Fig. 15 is a block diagram representing a schematic configuration of a portable communication terminal according to a third embodiment of the present invention. In Fig. 15, the same components as those of Fig. 1 are denoted by the same symbols, and description thereof is omitted as appropriate.

Also in the third embodiment, similarly to the first and second embodiments, a portable communication terminal 101B is capable of origination by appropriately changing over two local numbers, that is, the "business-use local number" and the "private-use local number", from one to another. The portable communication terminal 101B further includes a location measurement unit (location detection unit) 501 for measuring a current location of the portable communication terminal 101B. A control unit 105B can obtain current location information detected by the location measurement unit 501. Examples of a device that can be adopted as the location measurement unit 501 include a type in which a current location is measured based on a received GPS (Global Positioning System) signal. Alternatively, the location measurement unit 501 may detect a current location based on a positional relationship with a radio base station with which the portable communication terminal 101B is currently communicating.

In this embodiment, a memory (storage device) 113B in the portable communication terminal 101B stores the address book 112A and a location selection table 502. The address book 112A is identical to the address book used in the second embodiment. The CPU 106 refers to the location selection table 502 for changeover between the "business-use local number" and the "private-use local number" based on a current location. That is, the portable communication terminal 101B refers to the contents of the location selection table 502 based on the current location detected by the location measurement unit 501, thereby making it possible to change over to the local number to be used upon origination.

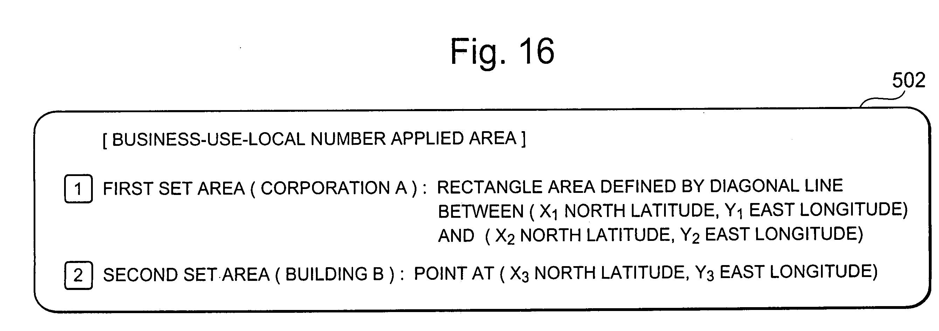

Fig. 16 is a diagram exemplifying contents of the location selection table provided to the portable communication terminal 101B according to the third embodiment. In this embodiment, stored in the location selection table 502 are, for example, first and second set areas in which the "business-use local number" is to be selected. The above first set area represents a rectangle area defined by a diagonal line that connects two points (X₁, Y₁) and (X₂, Y₂) determined based on the north latitudes and east longitudes, as a range including the location of a corporation A where the user works. On the other hand, the second set area represents a single point (X₃, Y₃) determined based on the north latitude and east longitude, as the location of a building B which accommodates a base such as headquarters where the user often comes.

The control unit 105B (CPU 106) stores in the memory 113B the location selection table 502 in which the set areas are individually associated with a point or an area determined based on the north latitude(s) and east longitude(s) and either of the local numbers (in this case, "business-use local number").

In the third embodiment, the current location of a user carrying the portable communication terminal 101B under operating conditions is determined based on the north latitude and east longitude detected by the location measurement unit 501. There may occur a situation where the current location of the portable communication terminal 101B (user) detected by the location measurement unit 501 is included in the first set area or coincides with the second set area. In that case, it is highly possible that the user is at the corporation A where he/she works or in the building B accommodating headquarters or the like.

In this embodiment, in such a case, the control unit 105B selects the "business-use local number" when the user makes a call by using the portable communication terminal 101B. On the contrary, when the user makes a call from the location outside the first set area and the second set area, the control unit 105B selects the "private-use local number". That is, the CPU 106 executes a processing described below.

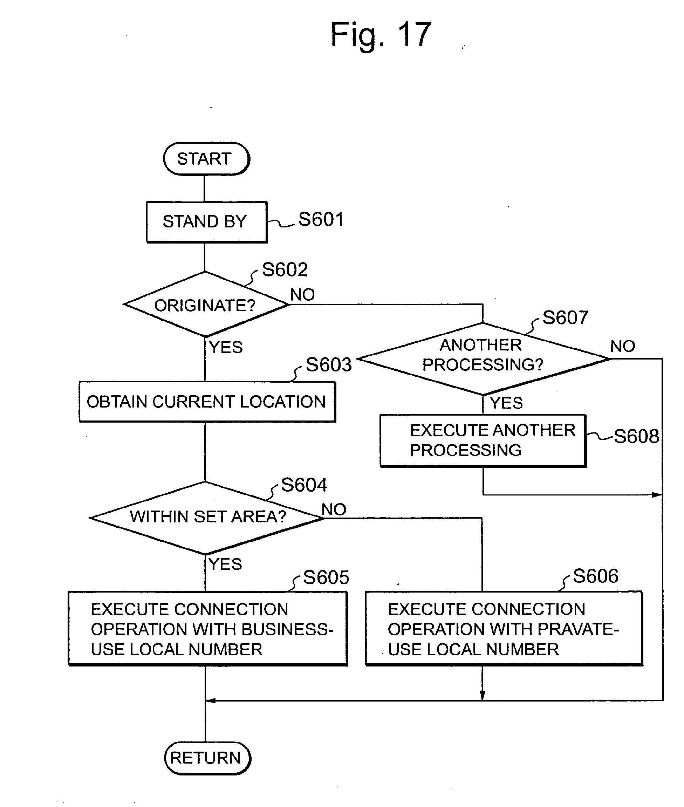

Fig. 17 is a flow chart showing the changeover control processing for local numbers which is performed when a call is originated by the portable communication terminal 101B according to the third embodiment. The flow chart represents a processing procedure of a software program executed by the CPU 106 of the control unit 105B.

When the power of the portable communication terminal 101B turns on, the CPU 106 enters a standby state (step S601). Further, when the power turns on, the location measurement unit 501 starts a detection operation for the current location of the portable communication terminal 101B.

In the standby state, the user can operate the operation unit 116 to select a desired processing. After the user uses the address book 112A (Fig. 15) or directly inputs the telephone number, a predetermined procedure can be followed to perform an origination operation.

If the user's origination operation is detected in step S602, the CPU 106 obtains the current location of the portable communication terminal 101B detected by the location measurement unit 501 (step S603). Next, the CPU 106 refers to the contents of the location selection table 502 to discriminate whether or not the current location obtained in step S603 is included in the first set area, or coincides with the second set area (step S604).

If judged that the portable communication terminal 101B is located within the first set area or the second set area in step S604, the CPU 106 uses the "business-use local number" to perform the connection operation (step S605). On the contrary, if judged that the portable communication terminal 101B is located within neither the first set area nor the second set area in step 5604, the CPU 106 uses the "private-use local number" to perform the connection operation (step S606).

Note that if the user selects a processing other than the origination operation in step S602, the CPU 106 executes the selected processing (step S608).

According to the third embodiment described above, the user does not need to judge which local number is to be selected every time a call is originated, thereby offering excellent convenience. Further, the portable communication terminal 101B can reliably solves the problem with who is to bear the charge for a telephone call which arises in the case where the user fails to change over the local numbers and other such cases.

Note that in each of the above-mentioned embodiments, the description has been made by taking as an example the portable communication terminal using the two categories of local numbers, that is, the "business-use local number" and the "private-use local number". However, two categories of local numbers other than the above categories may be used, or the portable communication terminal may use three or more categories of local numbers which may include the above categories.

Further, the present invention that has been described above by taking each embodiment as an examples is achieved by supplying the portable communication terminal 101, 101A, 101B with a computer program capable of implementing the function of each flow chart that has been referred to in the description, and by then causing the program to be read out by the CPU 106 of the device for execution thereof.

According to each embodiment that has been described above, in the portable communication terminal capable of originating a call with a plurality of local numbers changed over from one to another appropriately, a local number can automatically be changed over to the optimal local number based on a single condition representing an objective fact. Consequently, a local number can be changed over to the one to be used upon origination accurately and flexibly depending on circumstances.

Further, even without using the address book or electronic information describing a list of origination restrictions, the user can promptly answer a new customer. In addition, at that time, there is no need to manually select the local number, so that there occurs no human-induced mistake in selecting the local number. Consequently, there occurs no problem with management such as who is to bear the charge for a telephone call which arises in the case where the user fails to change over the local numbers and other such cases.

While this invention has been described in connection with certain preferred embodiments, it is to be understood that the subject matter encompassed by way of this invention is not to be limited to those specific embodiments. On the contrary, it is intended for the subject matter of the invention to include all alternatives, modifications, and equivalents as can be included within the spirit and scope of the following claims.

## Claims

1. A portable communication terminal which originates a call based on any one of a plurality of local numbers that can be used upon origination, **characterized by** comprising:
storage means (113, 113A, 113B) for storing a single condition to be satisfied upon execution of origination and a specific local number to be selected from the plurality of local numbers when the condition is satisfied in association with each other; and
origination control means (105, 105A, 105B, 106) for, when the condition is satisfied, originating a call to a communication counterpart based on the specific local number stored in association with the condition.

2. The portable communication terminal according to claim 1, **characterized in that** said origination control means includes selection means for, when the single condition is not satisfied, allowing a user to select which local number of the plurality of local numbers is to be used to originate a call.

3. The portable communication terminal according to claim 1 or 2, **characterized in that**:
the single condition indicates a specific communication counterpart, and
when the specific communication counterpart is selected by a user, said origination control means (105, 106) obtains from said storage means (113) the specific local number stored in association with the specific communication counterpart, and originates a call to the specif ic communication counterpart based on the obtained specific local number.

4. The portable communication terminal according to claim 3, **characterized by** further comprising termination control means for, in response to termination with respect to the specific local number, specifying an origination source corresponding to the termination, and performing an answering operation upon the termination when the specified origination source coincides with the specific communication counterpart stored in said storage means in association with the specific local number.

5. The portable communication terminal according to claim 4, **characterized in that** said termination control means includes selection means for allowing a user to select whether or not the answering operation is to be performed upon the termination.

6. The portable communication terminal according to claim 1 or 2, **characterized in that:**
the single condition indicates information representing a specific time frame, and
when a current time is included in the specific time frame, said origination control means (105A, 106) obtains from said storage means (113A) the specific local number stored in association with the specific time frame, and originates a call to the communication counterpart based on the obtained specific local number.

7. A portable communication terminal according to claim 6, **characterized in that**:
the specific time frame is a time frame for work at a corporation;
said storage means stores a private-use local number and a business-use local number of a user as the specific local number, and
said origination control means selects the business-use local number when the current time is included in the time frame at the corporation, and meanwhile selects the private-use local number when the current time is not included in the time frame.

8. The portable communication terminal according to claim 1 or 2, further comprising location detection means (501) for detecting a current location of said own terminal,
the single condition indicates information representing a specific area, and
when the current location detected by said location detection means is included in the specific area, said origination control means (105B, 106) obtains from said storage means (113B) the specific local number stored in association with the specific area, and originates a call to the communication counterpart based on the obtained specific local number.

9. The portable communication terminal according to claim 8, **characterized in that**:
the specific area is a location of a corporation or a predetermined area including a periphery of the location,
said storage means stores a private-use local number and a business-use local number of a user as the specific local number, and
said origination control means selects the business-use local number when the current location is included in the specific area, and meanwhile selects the private-use local number when the current location is not included in the specific area.

10. A control method for a portable communication terminal which originates a call based on any one of a plurality of local numbers that can be used upon origination, the method being **characterized by** comprising:
storing a single condition to be satisfied upon execution of origination and a specific local number to be selected from the plurality of local numbers when the condition is satisfied in association with each other in advance; and
originating a call to a communication counterpart based on the specific local number stored in association with the condition when the condition is satisfied.

11. The control method for a portable communication terminal according to claim 10, **characterized in that**:
the single condition indicates a specific communication counterpart, and
in said originating, when the specific communication counterpart is selected by a user, a call is originated to the specific communication counterpart based on the specific local number stored in association with the specific communication counterpart.

12. The control method for a portable communication terminal according to claim 10, **characterized in that**:
the single condition indicates information representing a specific time frame, and
in said originating, when a current time is included in the specific time frame, a call is originated to the specific communication counterpart based on the specific local number stored in association with the specific time frame.

13. The control method for a portable communication terminal according to claim 10, **characterized by** further comprising detecting a current location of the own terminal,
the single condition indicates information representing a specific area, and
in said originating, when the current location detected in said detecting is included in the specific area, a call is originated to the communication counterpart based on the specific local number stored in association with the specific area.

14. A computer program for operation control of a portable communication terminal which originates a call based on any one of a plurality of local numbers that can be used upon origination, the program being **characterized by** causing a computer to implement:
a storing function for storing in a storage device a single condition to be satisfied upon execution of origination and a specific local number to be selected from the plurality of local numbers when the condition is satisfied in association with each other; and
an origination control function for, when the condition is satisfied, originating a call to a communication counterpart based on the specific local number stored in association with the condition.

15. The computer program according to claim 14, **characterized in that**:
the single condition indicates a specific communication counterpart, and
by said origination control function, when the specific communication counterpart is selected by a user, the specific local number stored in association with the specific communication counterpart is obtained from the storage device, and a call is originated to the specific communication counterpart based on the obtained specific local number.

16. The computer program according to claim 14, **characterized in that**:
the single condition indicates information representing a specific time frame, and
by said origination control function, when a current time is included in the specific time frame, the specific local number stored in association with the specific time frame is obtained from the storage device, and a call is originated to the communication counterpart based on the obtained specific local number.

17. The computer program according to claim 14, **characterized in that**: said program includes computer program causing a computer to implement a location detecting function for detecting a current location of the own terminal,
the single condition indicates information representing a specific area, and
by said origination control function, when the detected current location is included in the specific area, the specific local number stored in association with the specific area is obtained from the storage device, and a call is originated to the communication counterpart based on the obtained specific local number.
